# EUROPÄISCHE PATENTSCHRIFT

(11) **EP 1 053 144 B1**
(45) Veröffentlichungstag und Bekanntmachung des Hinweises auf die Patenterteilung: **27.07.2005**
(21) Anmeldenummer: 99950486.3
(22) Anmeldetag: 31.07.1999
(51) Int. Cl.: B60S 1/38, B60S 1/40

(54) **WISCHBLATT FÜR SCHEIBEN VON KRAFTFAHRZEUGEN**
WIPER BLADE FOR AUTOMOBILE GLASS PANELS
RACLETTE D'ESSUIE-GLACE POUR DES VITRES DE VEHICULES AUTOMOBILES

(30) Priorität: 07.12.1998 DE 19856279
(43) Veröffentlichungstag der Anmeldung: 22.11.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/002369
(87) Internationale Veröffentlichungsnummer: WO 2000/034089

(56) Entgegenhaltungen:
- DE-A- 2 713 384
- DE-A- 2 843 164
- DE-A- 19 729 865
- US-A- 3 317 945

## Beschreibung

### Stand der Technik

Bei Wischblättern der im Oberbegriff des Anspruchs 1 bezeichneten Art soll die Halteschiene für das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung der unbelasteten Halteschiene - also wenn das Wischblatt nicht an der Scheibe anliegt, werden die Enden der im Betrieb des Wischblatts vollständig an der Scheibe angelegten Wischleiste durch die dann gespannte Halteschiene zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld der zu wischenden Scheibe gemessene stärkste Krümmung. Die Halteschiene ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach der Gattung des Anspruchs 1. Bei einem bekannten Wischblatt dieser Art (DE-OS 26 14 457) ist die Anschlußvorrichtung einstückig mit der Halteschiene verbunden. Sie besteht somit aus demselben Material wie die Halteschiene. Dies mag möglicherweise solange von untergeordneter Bedeutung sein, als die Halteschiene aus einem Kunststoff hergestellt und diese deshalb durch Füllen einer entsprechenden Form gefertigt wird. Wenn die Halteschiene jedoch aus Metall hergestellt werden soll, stehen sich zwei Forderung diametral gegenüber. Es soll nämlich einmal die Halteschiene gute Federeigenschaften aufweisen, andererseits sollen jedoch die Ansätze der Anschlußvorrichtung problemlos aus der Ebene der Halteschiene um etwa 90° herausgebogen und in dieser Position fixiert werden, damit die im Betrieb auftretende Belastungen zwischen Wischblatt und Wischerarm an Anschlagflächen dieser Ansätze aufgenommen werden können. Diese beiden Forderungen können praktisch kaum erfüllt werden, ohne daß man, hinsichtlich der Materialwahl, nachteilige Kompromisse eingehen muß.

Bei einem anderen bekannten Wischblatt (DE-AS 12 47 161) ist die Halteschiene mit einer als separates Bauteil ausgebildeten Anschlußvorrichtung versehen. Diese Anschlußvorrichtung ist mit Hilfe von Nieten mit der Halteschiene fest verbunden. Die dazu erforderlichen Bohrungen in der Halteschiene führen jedoch zu einer unerwünschten, weil unkontrollierbaren Veränderung der Halteschienen-Spannung, so daß kein befriedigendes Wischergebnis zu erreichen ist.

### Vorteile der Erfindung

Bei dem gemäß dem Kennzeichen des Anspruchs 1 ausgebildeten Wischblatt dagegen kann sowohl für die Halteschiene als auch für die Anschlußvorrichtung eine den Forderungen an das jeweilige Bauteil gerechtwerdende Materialwahl getroffen werden. Die Verbindung der beiden Bauteile miteinander erfolgt problemlos und preisgünstig durch Anformen der Anschlußvorrichtung an die vorgefertigte Halteschiene. Das Anformen wird dadurch erreicht, daß die Halteschiene in eine Gieß- oder Spritzform eingelegt wird, welche nach dem Schließen mit einem den Anforderungen entsprechenden Kunststoff gefüllt wird. Danach ist die Halteschiene mit der erforderlichen Anschlußvorrichtung versehen, ohne daß weitere Montageschritte erforderlich sind. Versuche haben gezeigt, daß durch das Anformen der Anschlußvorrichtung eine ausreichend feste Verbindung zwischen Anschlußvorrichtung und der Halteschiene erreicht wird.

Eine besonders zuverlässige Verbindung zwischen Halteschiene und Anschlußvorrichtung wird erreicht, wenn die Anschlußvorrichtung mit krallenartigen Ansätzen versehen ist, welche die beiden Seiten-Längskanten der Halteschiene zumindest abschnittsweise umgreifen und an der der Scheibe zugewandten Bandfläche der Halteschiene anliegen.

Wenn die Halteschiene mit Schultern versehen ist, denen Gegenschultern der Anschlußvorrichtung zugeordnet sind, ergibt sich eine absolut ortsfeste, gegen Verschiebung gesicherte Verbindung zwischen Halteschiene und Anschlußvorrichtung, weil sich beim Formen der Anschlußvorrichtung selbsttätig Gegenschultern ergeben, die mit den Schultern der Halteschiene zusammenwirken.

Dabei können die Schultern auf einfache Weise an Durchbrüchen und/oder randoffenen Ausnehmungen und/oder hakenförmigen Ausformungen des Tragelements ausgebildet sein.

Eine weitere Verbesserung der Befestigung der Anschlußvorrichtung an der Halteschiene wird durch Aufrauhungen erreicht, welche wenigstens an den der Anschlußvorrichtung zugewandten Oberflächen der Halteschiene angeordnet sind.

Ein besonders kompakt bauendes Wischblatt ergibt sich, wenn die Halteschiene aus einem Metall gefertigt wird.

Um die Halteschiene auf wirtschaftliche Weise mit einer Anschlußvorrichtung für den Wischerarm zu versehen und dabei den voneinander abweichenden Forderungen an die Halteschiene bzw. an die Anschlußvorrichtung in idealer Weise Rechnung zu tragen, dient ein erfindungsgemäßes Befestigungsverfahren gemäß dem die vorgefertigte Halteschiene in eine Form eingebracht wird, die nach dem Schließen mit Kunststoff gefüllt wird, so daß nach dem Öffnen der Form das Tragelement entnommen werden kann.

Weitere, vorteilhafte Weiterbildungen und Ausgestaltungen der Erfindung sind in der nachfolgenden Beschreibung eines in der dazugehörigen Zeichnung dargestellten Ausführungsbeispiels sowie in einer das beanspruchte und beschriebene Fertigungsverfahren erläuternde Figur angegeben.

### Zeichnung

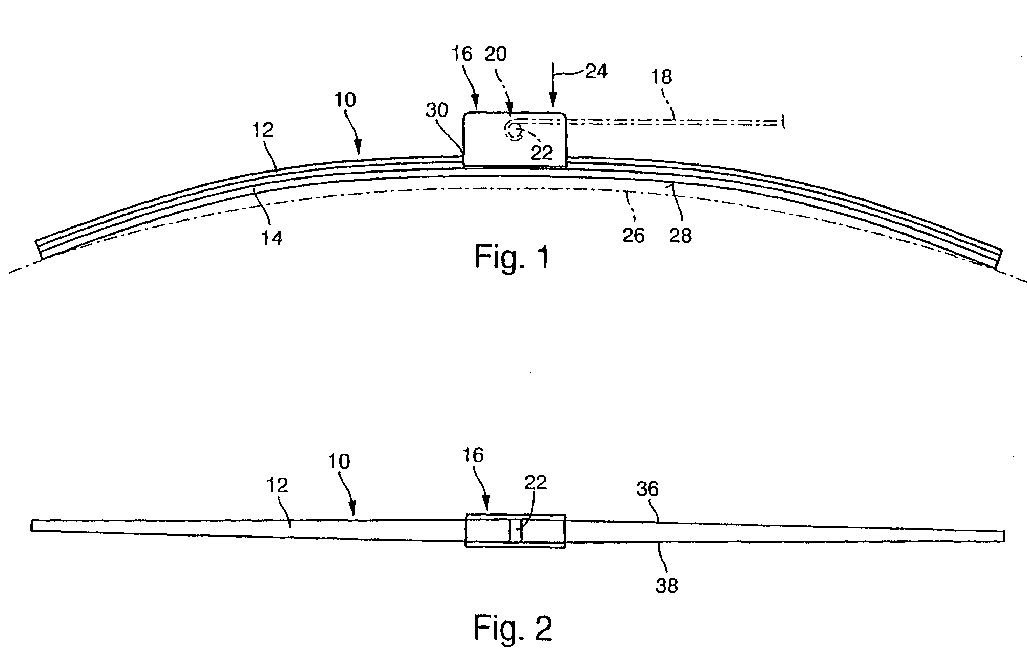

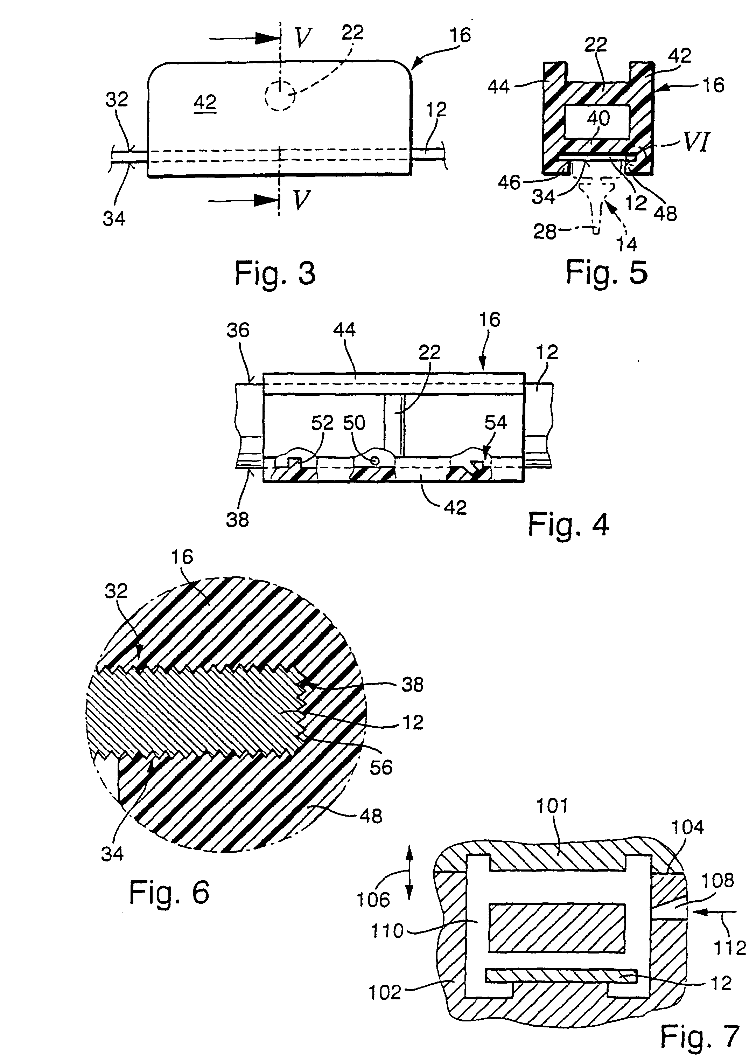

In der Zeichnung zeigen: Figur 1 eine Seitenansicht eines Wischblatts, Figur 2 eine Draufsicht auf das Wischblatt gemäß Figur 1, Figur 3 den Mittelabschnitt eines zum Wischblatt gemäß Figur 1 gehörenden Tragelements in Ansicht, vergrößert dargestellt, Figur 4 eine Draufsicht auf die Anordnung gemäß Figur 3, teilweise geschnitten, Figur 5 einen Schnitt durch die Anordnung gemäß Figur 3, entlang der Linie V-V, Figur 6 eine in Figur 4 mit VI bezeichnete Einzelheit, vergrößert dargestellt und Figur 7 einen Schnitt durch eine geschlossene Gießform mit eingelegter Halteschiene vor dem Füllen mit Kunststoff, zum Anformen der Anschlußvorrichtung an die Halteschiene.

### Beschreibung des Ausführungsbeispiels

Ein in den Figuren 1 und 2 dargestelltes Wischblatt 10 weist eine langgestreckte, federelastische Halteschiene 12 auf, an deren Unterseite eine langgestreckte, gummielastische Wischleiste 14 längsachsenparallel befestigt ist. An der Oberseite der aus einem federelastischen Material hergestellten Halteschiene 12 ist in deren Mittelabschnitt eine Anschlußvorrichtung 16 angeordnet, mit deren Hilfe das Wischblatt gelenkig mit einem angetriebenen Wischerarm 18 lösbar verbunden werden kann. Der Wischerarm ist mit seinem einen, nicht dargestellten Ende an einer Kraftfahrzeugkarosserie geführt. An dem anderen, freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift (Figur 1). Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch das Wischblatt sind in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheiben anliegenden Wischblatts stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich in der federelastischen Halteschiene 12 eine Spannung auf, welche für eine ordnungsgemäße Anlage der Wischleiste 14 bzw. deren Wischlippe 28 über deren gesamte Länge an der Scheibe sorgt. Die Halteschiene 12 bildet zusammen mit der an ihr angeordneten Anschlußvorrichtung 16 ein Tragelement 30 für die Wischleiste 14, welches über seine Anschlußvorrichtung 16 mit dem Wischerarm 18 zu verbinden ist.

Im folgenden soll insbesondere der Aufbau des Tragelements 30 anhand der Figuren 3 bis 6 näher erläutert werden. Wie insbesondere die Figuren 2 und 5 zeigen, ist die Halteschiene 12 als bandförmiges, langgestrecktes Bauelement ausgebildet, welches aus einem federelastischen Material besteht. Gemäß den Figuren 1 und 3 hat die Halteschiene 12 eine Bandfläche 32, welche von der Oberfläche 26 der zu wischenden Scheibe abgewandt ist. Die andere Bandoberfläche, welche der Scheibenoberfläche 26 zugewandt ist, ist mit der Bezugszahl 34 versehen. Ferner hat die Halteschiene 12 zwei einander gegenüberliegende, sich in Längsrichtung der Halteschiene 12 erstreckende Seitenkanten 36 und 38. Das Tragelement 16 hat einen im wesentlichen U-förmigen Querschnitt. Es weist somit eine U-Basis 40 und zwei mit Abstand voneinander angeordnete, an der U-Basis ansetzende U-Schenkel 42 und 44 auf. Wie die Figuren 2, 4 und 5 zeigen, halten die beiden U-Schenkel 42 und 44 den Gelenkbolzen 22. Jeder der beiden U-Schenkel 42 und 44 ist mit einem krallenartigen Fortsatz 46 und 48 versehen, der jeweils an der Außenseite der U-Basis 40 angeordnet ist und die beiden Längs-Seitenkanten 36, 38 der Halteschiene 12 so umgreift, daß sie an der der Scheibe zugewandten Bandfläche 34 der Halteschiene 12 anliegen. Beim Ausführungsbeispiel erstrecken sich die krallenartigen Ansätze 46 und 48 über die gesamte Länge der Anschlußvorrichtung 16. Damit die Elastität der Halteschiene 12 weniger beeinträchtigt wird, ist auch denkbar an der U-Basis 40 mehrere, mit Abstand voneinander angeordnete krallenartige Ansätze vorzusehen, welche die Halteschiene 12 in der beschriebenen Weise umgreifen. Dadurch, daß das Anformen des aus Kunststoff bestehenden Tragelements 30 an die metallische Halteschiene 12 mittels eines erwärmten, und damit fließbaren Kunststoff geschieht, ergibt sich bei dem nach dem Gießen erfolgenden Abkühlungsvorgang bzw. mit der damit verbundenen Schrumpfung des Kunststoffs ein in manchen Fällen ausreichender, ortsfester Sitz der Anschlußvorrichtung 16 an der Halteschiene 12. Bei schwierigeren Bedingungen kann es von Vorteil sein, wenn die Halteschiene 12 mit Schultern versehen ist, denen Gegenschultern der Anschlußvorrichtung zugeordnet sind. Diese Schultern können gemäß Figur 4 dadurch gebildet sein, daß die Halteschiene in dem von den krallenartigen Ansätzen 46 und 48 abgedeckten Bereich mit Durchbrüchen 50 versehen ist, deren Wandungen die Schultern bilden (Figur 4). Eine andere Möglichkeit zur Bildung der Schultern kann durch die Anordnung von randoffenen Ausnehmungen 52 oder durch die Anordnung von hakenartigen Ausformungen 54 erreicht werden. Sowohl die Ausnehmungen als auch die Ausformungen 54 sind in Figur 4 dargestellt. Bei der Anformung der Anschlußvorrichtung 16 an die Halteschiene in der oben schon beschriebenen Weise wird der flüssige Kunststoff in die Durchbrüche 50 bzw. in die randoffenen Ausnehmungen 52 bzw. in die hakenartigen Ausformungen 54 gedrückt, wo er aushärtet und die mit den Schultern zusammenarbeitenden Gegenschultern bildet. Zur weiteren Verbesserung des Sitzes der Anschlußvorrichtung 16 an der Halteschiene 12 kann es zweckmäßig sein, wenn die Halteschiene 12 an ihren Ober- oder Bandflächen 32, 34 zumindest in dem Bereich, welcher von Teilen der Anschlußvorrichtung abgedeckt ist mit zahn- oder wellenartigen Aufrauhungen 56 versehen ist. Diese Aufrauhungen 56 können selbstverständlich auch an den Seitenkanten 36 und 38 der Halteschiene 12 angeordnet sein. Diese Aufrauhungen sind vorzugsweise spanlos gebildet und können sich linienförmig erstrecken oder auch punktförmig ausgebildet sein.

Anhand von Figur 7 soll nachfolgend das Herstellungsverfahren für das Tragelement 60 beschrieben werden. Die dazu erforderliche Gießform weist gemäß der gezeigten Prinzipdarstellung zwei Formhälften 101 und 102 auf, die an einer Trennfuge 104 aneinander anliegen. In einer entsprechende Vorrichtung eingespannt, ist die Form 101, 102 öffenbar, in dem die beiden Formhälften 101 und 102 gemäß dem Doppelpfeil 106 relativ zueinander bewegt werden. Weiter hat die eine der beiden Formhälften 102 eine Füllöffnung 108. In die Gießform 101, 102 ist ein Ausgießraum 110 eingearbeitet, welcher auf die Gestalt der Anschlußvorrichtung 16 (Figuren 3 bis 5) abgestimmt ist. Die Füllöffnung 108 mündet in den Ausgießraum 110.

Das Herstellungsverfahren läuft wie folgt ab: Die Gießform 101 und 102 wird durch gegenläufiges Bewegen (Doppelpfeil 106) der Formhälften 101 und 102 geöffnet. Danach wird die Halteschiene 12 in die Formhälfte 102 eingelegt. Nach dem Schließen der Form 101, 102 - bei dem die Formhälften 101 und 102 solange entgegen dem Doppelpfeil 106 bewegt werden, bis die Formhälften 101 und 102 an der Trennfuge 104 aneinander anliegen - ist die Halteschiene 12 in der Formhälfte 102 in ihrer vorschriftsmäßigen Position fixiert. Nun wird durch die Füllöffnung 108 erwärmter und damit fließbarer Kunststoff in Richtung des Pfeiles 112 in den Ausgießraum 110 eingebracht. Nach dessen Füllung und einer entsprechenden Abkühlung des Kunststoff kann die Form 101, 102 wieder geöffnet und das fertige Tragelement 30 entnommen werden. Besonders zu bemerken ist, daß die Ausgestaltung der Form 101, 102 lediglich den prinzipiellen Aufbau einer solchen Gieß- oder Spritzform zeigen soll. Gießtechnische Belange - wie z.B. die Entformbarkeit des Tragelements 30 - sind dabei außer Betracht gelassen worden.

## Patentansprüche

1. Wischblatt (10) für Scheiben von Kraftfahrzeugen mit einer an der zu wischenden Scheibe (26) anlegbaren, langgestreckten, gummielastischen Wischleiste (14), die im wesentlichen längsachsenparallel an einem eine bandartig langgestreckte, federelastische Halteschiene (12) und eine an diesem angeordnete Anschlußvorrichtung (16) aufweisenden Tragelement (30) gehalten ist, wobei die Anschlußvorrichtung (16) an der von der Scheibe (26) abgewandten Bandfläche am Mittelabschnitt der Halteschiene (12) angeordnet ist und zum Anschließen des Wischblatts (10) an einem zur Scheibe belastbaren, angetriebenen Wischerarm (18) dient, **dadurch gekennzeichnet, daß** die Anschlußvorrichtung (16) aus einem Kunststoff gefertigt direkt und ortsfest an die vorgefertigte Halteschiene (12) angeformt ist.

2. Wischblatt nach Anspruch 1, **dadurch gekennzeichnet, daß** die Anschlußvorrichtung mit krallenartigen Ansätzen (46, 48) versehen ist, welche die beiden Seiten-Längskanten (36, 38) der Halteschiene (12) zumindest abschnittweise umgreifen und an der der Scheibe zugewandten Bandfläche (34) der Halteschiene (12) anliegen.

3. Wischblatt nach einem der Ansprüche 1 oder 2, **dadurch gekennzeichnet, daß** die Halteschiene (12) mit Schultern versehen ist, denen Gegenschultern der Anschlußvorrichtung (16) zugeordnet sind.

4. Wischblatt nach Anspruch 3, **dadurch gekennzeichnet, daß** die Schultern der Halteschiene an Durchbrüchen (50) ausgebildet sind.

5. Wischblatt nach Anspruch 3, **dadurch gekennzeichnet, daß** die Schultern der Halteschiene an randoffenen Ausnehmungen (52) ausgebildet sind.

6. Wischblatt nach Anspruch 3, **dadurch gekennzeichnet, daß** die Schultern der Halteschiene an hakenartigen Ausformungen (54) ausgebildet sind.

7. Wischblatt nach einem der Ansprüche 1 bis 6, **dadurch gekennzeichnet, daß** die Halteschiene (12) an wenigstens einer ihrer der Anschlußvorrichtung (16) zugewandten Oberflächen mit Aufrauhungen (56) versehen ist.

8. Wischblatt nach einem der Ansprüche 1 bis 7, **dadurch gekennzeichnet, daß** die Halteschiene aus einem Metall gefertigt ist.

9. Verfahren zum Befestigen einer aus Kunststoff bestehenden Anschlußvorrichtung (16) für einen Wischerarm (18) an einer zu einem Tragelement (30) eines Wischblatts (10) zum Reinigen von Scheiben von Kraftfahrzeugen gemäß einem der Ansprüche 1 bis 8 gehörenden Halteschiene (12), **dadurch gekennzeichnet, daß** die vorgefertigte Halteschiene in eine Form (102, 104) eingebracht wird, die nach dem Schließen mit aushärtbarem Kunststoff gefüllt wird, so daß nach dem Öffnen der Form das fertige Tragelement (30) entnommen werden kann.

## Claims

1. Wiper blade (10) for automobile glass panels, having an elongate, rubber-elastic wiper strip (14) which can be placed against the glass panel (26) to be wiped and is held in a manner essentially parallel to the longitudinal axis on a supporting element (30), which has a spring-elastic retaining rail (12), which is elongate in the manner of a band, and a joining device (16) which is arranged on the said retaining rail, the joining device (16), on the band surface which faces away from the glass panel (26), being arranged on the central section of the retaining rail (12) and serving to join the wiper blade (10) to a driven wiper arm (18) which can be loaded towards the glass panel, **characterized in that** the joining device (16), which is manufactured from a plastic, is integrally formed directly and in a positionally fixed manner on the premanufactured retaining rail (12).

2. Wiper blade according to Claim 1, **characterized in that** the joining device is provided with claw-like lugs (46, 48) which engage at least in some sections around the two side longitudinal edges (36, 38) of the retaining rail (12) and bear against that band surface (34) of the retaining rail (12) which faces the glass panel.

3. Wiper blade according to either of Claims 1 and 2, **characterized in that** the retaining rail (12) is provided with shoulders to which mating shoulders of the joining device (16) are assigned.

4. Wiper blade according to Claim 3, **characterized in that** the shoulders of the retaining rail are formed on apertures (50).

5. Wiper blade according to Claim 3, **characterized in that** the shoulders of the retaining rail are formed on recesses (52) which are open at the edge.

6. Wiper blade according to Claim 3, **characterized in that** the shoulders of the retaining rail are formed on hook-like formations (54).

7. Wiper blade according to one of Claims 1 to 6, **characterized in that** the retaining rail (12) is provided with roughenings (56) on at least one of its surfaces facing the joining device (16).

8. Wiper blade according to one of Claims 1 to 7, **characterized in that** the retaining rail is manufactured from a metal.

9. Method for fastening a joining device (16), which consists of plastic, for a wiper arm (18) to a retaining rail (12) which belongs, according to one of Claims 1 to 8, to a supporting element (30) of a wiper blade (10) for cleaning automobile glass panels, **characterized in that** the premanufactured retaining rail is placed into a mould (102, 104) which, after closing, is filled with curable plastic, so that, after the mould is opened, the finished supporting element (30) can be removed.

## Revendications

1. Raclette d'essuie-glace (10) pour les vitres de véhicules automobiles comportant une lame d'essuyage (14) ayant l'élasticité du caoutchouc, allongée, appliquée contre la vitre (26) à essuyer, cette lame essentiellement parallèle à l'axe longitudinal étant tenue par un rail de fixation (18) ayant l'élasticité d'un ressort, en forme de ruban, allongé, avec un élément de support (30) ayant un dispositif d'accouplement (16) prévu sur ce rail,
le dispositif d'accouplement (16) étant prévu sur la surface de bande non tournée vers la vitre (26) du segment central du rail de fixation (12) et servant à accrocher la raclette (10) à un bras d'essuie-glace (18) entraîné, poussé vers la vitre,
**caractérisée en ce que**
le dispositif d'accouplement (16) est fabriqué en une matière plastique, directement et à l'emplacement du rail de fixation préfabriqué (12).

2. Raclette d'essuie-glace selon la revendication 1,
**caractérisée en ce que**
le dispositif d'accouplement comporte des prolongements en forme de griffes (46, 48) entourant au moins par segments les deux arêtes longitudinales latérales (36, 38) du rail de fixation (12) et s'appliquant contre la surface de ruban (34) tournée vers la vitre du rail de fixation (12).

3. Raclette d'essuie-glace selon l'une des revendications 1 ou 2,
**caractérisée en ce que**
le rail de fixation (12) comporte des épaulements auxquels sont associés les contre-épaulements du dispositif d'accouplement (16).

4. Raclette d'essuie-glace selon la revendication 1,
**caractérisée en ce que**
les épaulements du rail de fixation sont constitués par des passages (50).

5. Raclette d'essuie-glace selon la revendication 3,
**caractérisée en ce que**
les épaulements du rail de fixation sont réalisés par des cavités à bord ouvert (52).

6. Raclette d'essuie-glace selon la revendication 3,
**caractérisée en ce que**
les épaulements du rail de fixation sont réalisés sur des déformations (54) en forme de crochets.

7. Raclette d'essuie-glace selon l'une des revendications 1 à 6,
**caractérisée en ce que**
le rail de fixation (12) est muni de parties rugueuses (56) sur au moins l'une de ses surfaces tournées vers le dispositif d'accouplement (16).

8. Raclette d'essuie-glace selon l'une des revendications 1 à 7,
**caractérisée en ce que**
le rail de fixation est fabriqué en métal.

9. Procédé de fixation d'un dispositif d'accouplement (16) en matière plastique d'un bras d'essuie-glace (18) sur un rail de fixation (12) faisant partie d'un élément de support (30) d'une raclette d'essuie-glace (10) de véhicules automobiles selon l'une des revendications 1 à 8,
**caractérisé en ce qu'**
on place le rail de fixation préfabriqué dans un moule (102, 104) que l'on remplit de matière plastique durcissable après la fermeture du moule pour qu'après l'ouverture du moule on puisse en extraire l'élément de support (30) terminé.
